# EUROPÄISCHE PATENTSCHRIFT

(11) **EP 0 753 401 B1**
(45) Veröffentlichungstag und Bekanntmachung des Hinweises auf die Patenterteilung: **06.05.1999**
(21) Anmeldenummer: 96110093.0
(22) Anmeldetag: 21.06.1996
(51) Int. Cl.: B32B 1/10, B32B 3/14, B32B 27/36, A47B 77/02

(54) **Schichtkörper und Verfahren zu seiner Herstellung**
Multilayered composite body and method for its manufacture
Stratifié composite et procédé pour sa fabrication

(30) Priorität: 29.06.1995 DE 29510536 U
(43) Veröffentlichungstag der Anmeldung: 15.01.1997
(73) Patentinhaber: Schlaaff, Louise, Dr., 2600 Baguio City (PH); Schlaaff, Helmut, 2600 Baguio City (PH)
(72) Erfinder: Schlaaff, Louise Dr., 2600 Baguio City (PH); Schlaaff, Helmut, 2600 Baguio City (PH)
(74) Vertreter: Motsch, Andreas

(56) Entgegenhaltungen:
- EP-A- 0 229 262
- DE-A- 2 717 377
- DE-A- 2 828 734
- DE-A- 3 501 484
- DE-A- 3 734 530
- GB-A- 1 468 532
- GB-A- 2 284 378
- US-A- 3 646 180
- US-A- 3 839 519
- US-A- 4 086 318
- DATABASE WPI Week 9402 Derwent Publications Ltd., London, GB; AN 94-013062 XP002011204 & JP-A-05 321 441 (TAISEI CONSTR. CO. LTD.)
- DATABASE WPI Week 8224 Derwent Publications Ltd., London, GB; AN 82-49375e XP002011205 & JP-A-57 024 128 (INA SEITO KK)

## Beschreibung

Die Erfindung betrifft Schichtkörper mit einer ersten Schicht aus einem ein wasserfestes gehärtetes Gießharz enthaltenden Material und einer mit dieser Schicht fest verbundenen zweiten Schicht aus einer Vielzahl von einzelnen Plättchen aus einem mineralischen Werkstoff.

In der DE 3734530 C2 wird ein Schichtkörper in Form einer Tischplatte, insbesondere für Waschtische in Badezimmern, beschrieben mit einer Grundplatte aus einem organische Werkstoffe enthaltenden Material und einer mit der Grundplatte fest verbundenen Auflage aus einer Vielzahl von einzelnen Plättchen aus einem mineralischen Werkstoff, wobei die Plättchen in der Weise lückenlos aneinanderstoßen, daß die kleinstmöglichen Stoßfugen zwischen den einzelnen Plättchen mit bloßem Auge praktisch nicht wahrnehmbar sind, daß die Stoßfugen mit einem Kunststoffkleber ausgefüllt sind und daß die Oberflächen der Plättchen aufgrund eines gemeinsamen Schleifprozesses eine gemeinsame ebene Oberfläche aus mineralischem Werkstoff bilden. Die Außenränder der Platte werden hierbei mit Streifen aus mineralischem Werkstoff belegt.

Ferner wird in der genannten Patentpublikation ein Verfahren zum Herstellen von Tischplatten beschrieben, wobei man die Stoßfugen der Plättchen mit dem Kunststoffkleber ausfüllt und den Flächenbelag einem Schleif- und Poliervorgang unterzieht.

Bei diesem dem Stand der Technik entsprechenden Verfahren werden handelsübliche Sperrholzplatten entsprechend der gewünschten Form ausgesägt und zugeschnitten und mit Steinplättchen der Form der Holzträgerplatte folgend unter Verwendung eines Kunststoffklebers beklebt. Anschließend wird die rohgefertigte Platte in einem Schleifprozeß zur weiteren Form- und Glanzgebung geschliffen, wie von der Herstellung monolithischer Steinplatten allgemein bekannt.

Bei den Platten der beschriebenen Art hat es sich als nachteilig erwiesen, daß es für den Fall, daß Wasser, beispielsweise durch Kapillareffekte, in Armaturlochbohrungen oder im Bereich von Waschbeckenausschnitten in die Platte eindringt, es zu einem Aufquellen des holzhaltigen Trägermaterials kommen kann. Die flächenbündigen Steinplättchen werden dabei angehoben und die Fugen zwischen den Plättchen öffnen sich, so daß weiteres Wasser eindringen kann und den Klebeverbund zwischen Holz und Steinplättchen zerstören kann. Als Folge können sich die Steinplättchen von der Holzträgerplatte lösen. Da das Holz aufgequollen ist, ist eine Reparatur kaum mehr möglich, so daß die Platte unbrauchbar geworden ist.

Ein weiterer Nachteil von Tischplatten der beschriebenen Gattung auf der Basis von Holzplatten besteht darin, daß es nur bestimmte handelsübliche und damit verfügbare Plattenstärken gibt. Dies stellt eine Beschränkung in der Herstellung der Tischplatten hinsichtlich jeder gewünschten Plattenstärke dar.

Ein weiterer wesentlicher Nachteil von Holzplatten als Trägermaterial unter Verwendung von Klebern besteht darin, daß die Oberfläche der Platten in Bezug auf ihre Adhäsion zum Trägermaterial unbestimmte Festigkeiten aufweist. Dies liegt daran, daß die einzelnen Holzfasern unterschiedliche Verbindung zur gesamten Holzplatte haben und der Kleber zwischen der Holzplatte und dem die Oberfläche bildenden Steinmaterial zwar eine bestimmte Adhäsionsfähigkeit je nach Kleber aufweist, sich jedoch der Kleber mitsamt den mit ihm verbundenen Holzfasern von der Holzplatte lösen kann. Der Verbund innerhalb der Holzplatten unterliegt jedoch großen Schwankungen.

Neben der in der DE 3734530 C2 beschriebenen Tischplatte gibt es auch Tischplatten aus einem Holzträgermaterial, die mit Keramik, einem Kunstharzmineralgemenge oder einer Schichtstoffauflage auf dem Holzuntergrund versehen sind. Sie weisen jedoch ebenfalls die mit dem Trägermaterial aus Holz verbundenen Nachteile auf.

In der JP-A-5321441 wird die Befestigung von Fliesen beispielsweise an Schwimmbädern und Wassertanks beschrieben. Hierbei werden die Fliesen auf einer Form befestigt, die ein faserverstärktes ungesättigtes Polyesterharz enthält. Diese Befestigung erfolgt unter Zuhilfenahme eines Silikon-Kautschuk-Klebers, der die Fliesen mit dem Harz verbindet. Diese Veröffentlichung enthält keine Hinweise auf die Verwirklichung eines Schichtkörpers mit dem optischen Eindruck einer Natursteinplatte. Sie zielt vielmehr auf die Elastizität der Befestigung ab.

In der JP-A-57024128 wird die Herstellung einer Badewanne mit synthetischem Marmor beschrieben. Diese Herstellung erfolgt, indem man eine Knetmischung aus ungesättigtem Polyesterharz und zerkleinerten natürlichen Steinen härtet, das so gebildete Plattenmaterial aus synthetischem Marmor in die gewünschte Form schneidet, diesen unter Verwendung eines ungesättigten Polyesterharzes zu einer Badewanne zusammenbaut und eine Schichthärtung der Glasfaser und des Harzes am äußeren Umfang jedes Teils durchführt.

Daneben sind Tischplatten aus monolithischen Natursteinplatten bekannt, die zwar optisch besonders attraktiv sind und im Feuchtraum bei Becken- und Armaturdurchführungen sehr widerstandsfähig sind, jedoch erschwert das große Gewicht der Natursteinplatte den Transport, sie neigt zum Bruch und muß insbesondere hinsichtlich Farbe und Struktur so hingenommen werden, wie die Natur des entsprechenden Monolithen beschaffen ist. Nachteilig ist hierbei auch, daß spätere Reparaturen normalerweise sichtbar bleiben und daß lange, schmale winkelige Anordnungen mit ihren Rundungen aufwendig herzustellen sind und oft in mehreren unterteilten Platten geliefert werden müssen.

Der Erfindung liegt daher die Aufgabe zugrunde, einen Schichtkörper der eingangs beschriebenen Gattung und ein Verfahren zu seiner Herstellung bereitzustellen, wobei der Schichtkörper die Nachteile des Standes der Technik Überwindet, dem optischen Eindruck einer Natursteinplatte entspricht, eine natursteinbelassene Oberfläche aufweist, gleichzeitig jedoch eine genau festlegbare Farb-, Struktur- und Texturauswahl zuläßt.

Die Aufgabe wird erfindungsgemäß gelöst durch einen Schichtkörper mit einer ersten Schicht aus einem ein wasserfestes gehärtetes Gießharz enthaltenden Material und einer mit dieser Schicht fest verbundenen zweiten Schicht aus einer Vielzahl von einzelnen Plättchen aus einem mineralischen Werkstoff, wobei der Schichtkörper dadurch gekennzeichnet ist, daß Plättchen (5) lückenlos aneinanderstoßen und daß zwischen den beiden Schichten kein Kleber vorliegt.

Bei dem erfindungsgemäßen Schichtkörper ist eine Beschädigung durch eindringendes Wasser nicht möglich. Ferner ist der Schichtkörper vorteilhafterweise nicht quellbar. Der erfindungsgemäße Schichtkörper weist auch ein weitaus geringeres Gewicht und eine viel höhere Bruchsicherheit gegenüber einem Schichtkörper oder einer Platte gemäß dem Stand der Technik auf, neben einer halbelastischen Festigkeit im Bereich der thermischen Ausdehnung. Durch den erfindungsgemäßen Schichtkörper wird eine Natursteinoberfläche zur Verfügung gestellt, deren Farbe, Textur und Struktur sich von vornherein bestimmen läßt und die nicht nur einen Natursteinplatten-Gesamteindruck vermittelt, sondern auch die Vorteile des Materials Naturstein bietet, ohne dessen Nachteile in Kauf nehmen zu müssen.

Man stellt die Gießharzmischung nach einer genau festgelegten Rezeptur zusammen und überprüft diese, um gleichbleibende physikalische Eigenschaften des Verbunds zu erhalten. Hierzu gehört insbesondere die Adhäsionsfähigkeit des Harzes, das direkt als Träger- und Verbindungsmaterial für die Natursteinplättchen dient. Die hohe Festigkeit zwischen dem Kunstharzträgermaterial und den Plättchen wird somit zu einer bestimmbaren Größe, die nicht in einem weiten Bereich schwankt. Das Trägermaterial weist ferner keine nennenswerte Kapillarität auf.

Versuche haben ergeben, daß beim gewaltsamen Herauslösen von auf Holzplatten aufgeklebten Steinen, entsprechend dem Stand der Technik, der Stein als ganzes mit dem anhaftenden Kleber und der oberen Faserschicht der Holzplatte herausgerissen werden kann. Dagegen ist bei Anwendung solcher Kräfte und der Verwendung des Gießharzes als Träger- und Verbindungsmaterial die Festigkeit so groß, daß der Stein zerstört wird, wobei Reste des Steins weiterhin an der Gießharzträgerplatte haften.

Ein weiterer wesentlicher Vorteil des erfindungsgemäßen Schichtkörpers besteht darin, daß sich in das Gießmaterial nahezu beliebige Einlagen, wie Metallteile, Durchführungen, Gewindehülsen, Kanäle, Rohre, Kabel und optische Fasern einlagern lassen, was bei den Platten des Standes der Technik nur aufwendig und beschränkt machbar ist.

Ferner wird durch die Verwendung des Gießharzes eine millimetergenaue Formgebungsmöglichkeit erreicht, durch die sogar Formgebungen im technischen Natursteinbereich möglich werden, die nur durch Bildhauerei erreicht werden. So ist nunmehr die Herstellung von Schichtkörpern gemäß Anspruch 1 möglich, die einen dreidimensionalen, unregelmäßig geformten Körper bilden. Es sind beispielsweise Helices möglich mit farblich variabel angeordneten Plättchen.

In einer bevorzugten Ausführungsform ist das Gießharz ein Polyesterharz.

In einer weiteren bevorzugten Ausführungsform weist die erste Schicht aus einem organische Werkstoffe enthaltenden Material ferner Glasfasern und Calciumcarbonat auf.

Vorzugsweise werden handelsübliche ungesättigte Polyesterharze mit halbflexibler Einstellung gegen Sprödigkeit unter Verwendung von Glasfasern so verwendet, daß hiermit eine Dichte von 1,9 kg/dm, eine Zugfestigkeit bis zu 320 N/mm, eine Biegefestigkeit bis 4100 N/mm und Wärmedehnzahlen von etwa 0,05 mm/mK erreicht werden. Der Calciumcarbonatanteil beträgt vorzugsweise etwa 30 Gew.-%. Das Calciumcarbonat dient als schrumpfmindernder Zusatz und dient gleichzeitig als Füllmittel, wodurch er einen artverwandten Träger für die Steinplättchen darstellt.

Der Glasfaseranteil beträgt vorzugsweise ebenfalls ca. 30 Gew.-% des Trägermaterials. Vorteilhafterweise wird von dem Gemenge aus Polyester, Glasfaser und Calciumcarbonat, dem Stabilisierungs- und Armierungsteile zugesetzt sein können, Wasser praktisch nicht aufgenommen, so daß Beschädigungen durch eindringendes Wasser nicht möglich sind.

Das Gießharz bzw. das Gießharzgemenge haftet praktisch nur an der rauhen Rückseite der Steinplättchen, auch Module genannt, da die Seiten der Module paßgenau aneinander stoßen und das Gießharz nicht kriechfähig ist. Im Gegensatz zu den im Stand der Technik beschriebenen Schichtkörpern der genannten Art wird erfindungsgemäß kein Kleber benötigt.

Aufgrund der beschriebenen Vorteile eignet sich der erfindungsgemäße Schichtkörper insbesondere zur Verwendung in Feuchträumen, wobei seine Verwendung als Waschtischplatte besonders bevorzugt ist.

Desweiteren ist ein Schichtkörper der beschriebenen Art besonders bevorzugt, bei dem die erste Schicht Ausnehmungen, vorzugsweise in Wabenform, aufweist.

Diese Ausführungsform führt ohne Verlust an Stabilität zu einer Einsparung an Material bei gleichzeitig deutlich geringerem Gewicht des Schichtkörpers, verbunden mit einer verbesserten Elastizität.

In einer weiteren besonders bevorzugten Ausführungsform sind die Plättchen des Schichtkörpers in Form von Quadraten, Rechtecken, Trapezen oder Dreiecken ausgebildet.

Hierbei haben quadratische Module gegenüber andersformatigen Modulen den Vorteil, daß sie bei der Verlegung nicht an eine Richtung gebunden sind. Ferner haben sie bei gleicher Fläche den geringsten Umfang und damit die geringste Fugenlänge.

Die Natursteinelemente aus metamorphorem Gestein, die vollständig als Module vorgefertigt sind, bilden nach dem Aufgießen des Harzes die gewünschte, naturbelassene Steinoberfläche des Schichtkörpers. Die Steinmodule sind üblicherweise 5 mm dicke Quadrate mit einer Kantenlänge von 4 cm, die an der Oberflächenseite hochglanzpoliert sind. Dies ermöglicht eine Auswahl von Farbe, Textur und Struktur des Steins und somit die Wahl für das gesamte Erscheinungsbild der Platte mit der Natursteinoberfläche.

Der Schichtkörper unterscheidet sich wesentlich von Schichtkörpern, bei denen entweder Fliesen oder Mosaike auf Trägerplatten aufgeklebt werden, da durch die Steinmodulverlegung nur Minimalfuge bleiben. Der Schichtkörper unterscheidet sich auch von Werkstoffen, bei denen die Natursteinelemente auf Trägerplatten aufgeklebt, die Restfugen mit Kunstharz ausgefüllt werden und die Natursteinoberfläche durch ein gemeinsames Verschleifen und Polieren von Platten- und Kunstharzoberflächen eben gemacht werden. Erfindungsgemäß werden also die Vorteile monolithischer Natursteinplatten und die von reinen Kunstharzplatten erreicht, ohne deren Nachteile in Kauf nehmen zu müssen.

In einer weiteren bevorzugten Ausführungsform besteht eine oder mehrere der seitlichen Begrenzungen des Schichtkörpers aus Halbzylindern eines mineralischen Werkstoffs mit vorzugsweise einer zur Zylinderlänge parallel verlaufenden inneren Nut.

Zur Vorbereitung der Rundung der Plattenkante in Naturstein können beispielsweise 0,2 bis 15 cm lange, 4 cm dicke Rundstäbe gedreht und der Länge nach halbiert werden. Das hierbei angewendete Verfahren ist das Trennschleifverfahren. Diese Stäbe werden anschließend hochglanzpoliert, und sie können in die Gießform mit einer entsprechenden Gehrung eingelegt werden, wobei vorzugsweise in dem flachen, unpolierten Teil der Halbzylinderstäbe eine 5 mm tiefe und 10 mm breite Nut eingelassen ist, um die Gießmasse zur festen Verbindung aufzunehmen. Da die Rundstäbe gedreht sind, ist ein exakter Radius für alle Rundkanten der Platte sichergestellt. Die auf Gehrung gefertigten 45°-Winkel sind stabil. 90°-Winkel werden durch zwei 45°-Winkelstücke gefertigt. Die Steinmodule und die Halbzylinderstäbe bilden somit die Oberfläche des Schichtkörpers, dessen Form und Zusammenhalt durch die eingegossene Kunstharzplatte gegeben ist. Der Gesamteindruck von Natursteinecken wirkt im technischen Bereich wie auch im Bereich der gehobenen Badausstattung sehr solide.

Im Gegensatz zu den in der DE 3734530 C2 beschriebenen Außenrändern einer Platte, die durch Bildung von Streifen erzielt werden, werden erfindungsgemäß an den Außenrändern exakte Rundungen erreicht.

Es wird ferner erfindungsgemäß ein Verfahren zur Herstellung eines Schichtkörpers der beschriebenen Art bereitgestellt, das dadurch gekennzeichnet ist, daß auf die Unterseite der zweiten Schicht aus einer Vielzahl von einzelnen Plättchen aus einem mineratischen Werkstoff ein wasserfestes Gießharz aufgebracht wird.

Vorzugsweise werden, bevor das Gießharz aufgebracht wird, die die zweite Schicht bildenden Plättchen mit ihrer vorpolierten Oberseite nach unten auf eine als Matrize dienende Form lückenlos gelegt.

Das Schneiden der Steinmodule erfolgt durch Trennschleifen. Zunächst wird die grundsätzliche Form und das annähernde Maß des Steinmoduls aus dem ursprünglichen Gesteinsblock herausgeschnitten. Dabei sind allerdings beim Schneiden gewisse Maßtoleranzen hinzunehmen, die bei der weiteren Verarbeitung, dem sogenannten Paßschleifen, korrigiert werden müssen. Besonders beim Aneinanderreihen von geometrischen Figuren, wie Quadrate, Trapeze, Rechtecke oder Dreiecke, führen Maßtoleranzen durch Addition zu Paßschwierigkeiten, da vor allem die Winkelgenauigkeit der Stoßfugen betroffen ist.

Nach dem Trennschleifen werden die Module einseitig oberflächenpoliert. Das ist ein Naßschleifvorgang. Die Rückseite und Kanten der Module bleiben rohbelassen, wie es der vorangegangene Schnitt vorgegeben hat. Erst beim Einlegen in die Form bzw. in den Designmusterträger werden die Kanten der Module paßgeschliffen. Bei diesem Vorgang handelt es sich um einen manuellen Schleifvorgang, der ein hohes Maß an handwerklichem Können verlangt.

Eine Aluminiumschiene gibt zu Beginn der paßschleifarbeiten eine gerade Linie vor. Die erste Modulreihe wird entlang dieser Schiene verlegt, wobei alle vier Seiten des Moduls ständig durch einen wiederholten kurzen Schleifvorgang solange angepaßt werden, bis das Modul perfekt anliegt. Diese erste Reihe bildet dann wiederum eine gerade Linie, gegen die die nächste Reihe angepaßt wird usw. Kleine Winkelabweichungen links und rechts des Moduls werden durch dieses Paßschleifen ausgeglichen.

Die verbleibenden Minimalfugen sind hauptsächlich für die thermische Ausdehnung nützlich. Im Bereich der Durchführungen kann das Gießharz bis auf den Formboden unter Verwendung eines Silikonzusatzformstücks, wie das eines Beckenausschnitts oder einer Armaturdurchführung, gegossen werden, um eine gemeinsame abschließende Kante und Oberfläche mit dem Natursteinbelag an diesen kritischen Kanten zu bilden.

Bei dem Herstellungsverfahren wird eine variabel gestaltbare Aluminiumform verwendet, die vorzugsweise aus möbelmaßgängigen, planen Bodenelementen besteht, die nach Bedarf mit und ohne Verlängerung zusammen montiert werden können. Die Seitenwände der Form sind üblicherweise 3,5 cm hoch und mit flachem Silikon belegt. Die Seitenteile, die die halbrunden Steinmodule aufnehmen, haben ebenfalls einen Silikonbelag mit genau der halbrunden Steinmodulform. Dasselbe gilt für die Eckelemente. Nach dem Zusammenmontieren der Form werden alle Halbrundmodule fixiert. Dann werden die Module in der beschriebenen Art aneinander gefügt. Schließlich wird der Formboden mit den Steinmodulen so fixiert belegt, daß die hochglanzpolierte und plane Fläche des Moduls auf dem Aluminiumboden unverrückbar zu liegen kommt. Nun sind nur die unbearbeiteten Rückseiten der Module sichtbar, die absichtlich unbehandelt belassen werden, um dann dem aufsitzenden gegossenen Kunstharzgemenge entsprechende Haftung zu ermöglichen. Schließlich werden verbleibende Eckflächen entsprechend mit passend zugeschnittenen und paßgeschliffenen Modulen geschlossen, so daß sich die völlig geschlossene, fertige Natursteinoberfläche in der Aluminiumform befindet. Die Durchführungen werden durch zusätzliche Formelemente gestaltet.

Schließlich wird das Kunstharzgemenge, welches entsprechend eingefärbt und mit Zusätzen versehen werden kann, um Schrumpfung zu vermeiden, nach Feststellung des Volumenbedarfs, der sich aus dem verbleibenden Formvolumen minus der Silikonzusatzform für beispielsweise die Wabenformung ergibt, eingegossen. Letztlich kann die Silikonform für die Wabenformung aufgelegt werden. Ein Vibrator sorgt für die Verdichtung bzw. Luftblasenbeseitigung. Man laßt den Gießharzspiegel bis zur Formkante ansteigen.

Nach gründlicher Aushärtung werden die Silikonformteile und Formseitenteile abgenommen. Die fertige Platte kann vom Boden genommen werden. Es folgt eine Endreinigung und eventuell kleine Reparaturen als Abschluß des Fertigungsverfahrens.

In einer speziellen Ausführungsform des erfindungsgemäßen Verfahrens werden die Plättchen, bevor sie in die Form gelegt werden, mit ihren vorpolierten Oberseiten nach oben auf einer gedruckten Schablone als Gesamtoberfläche zusammengestellt und diese wird durch ein Netzlaminat zusammengehalten. Hierbei kann als Netzlaminat ein Glasfasergewebe dienen, das auf die Plättchen aufgeklebt wird.

Diese spezielle Ausführungsform ist dann vorteilhaft, wenn an die Verlegetechnik der Steinmodule für die Oberfläche des Schichtkörpers durch Ästhetik, Geometrie und Design, beispielsweise bei schwierigen Mustern und Farben, hohe Anforderungen gestellt werden. Darüberhinaus lassen sich schwierige Verbundarten nicht immer ohne weiteres in die Gießform fehlerfrei einlegen. Das Netzlaminat garantiert einen vorübergehenden Zusammenhalt der Oberfläche, wobei das gesamte Oberflächenmodul anschließend in die Hauptgießform eingebracht wird. Der weitere Arbeitsvorgang erfolgt dann in beschriebener Weise. Nach dem Vergießen mit der Gesamtplatte wird das Netzlaminat entfernt.

In einer weiteren speziellen Ausführungsform des erfindungsgemäßen Verfahrens werden zur Herstellung eines Ausschnitts, insbesondere eines Beckenausschnitts für Unterbaubecken, für einen Schichtkörper, die Plättchen mit ihren Oberseiten als Segmente gegen die Innenkante einer negativen Ausschnittsform paßgenau angelegt, die Form mit Gießharz aufgefüllt und das entstandene Ausschnittsmodul in den Schichtkörper positioniert und durch weiteres Gießharz mit dem Schichtkörper verbunden.

Diese spezielle Ausführungsform ist besonders vorteilhaft, wenn beispielsweise in Waschtischplatten Waschbecken nicht von oben in die Waschtischplatte eingebaut werden, sondern sogenannte Unterbaubecken eingebaut werden. Bei dieser Einbauweise übernimmt die Waschtischplatte die Aufgabe des Beckenrands. Moderne Unterbaubecken haben ausgefallene Formen und sind nicht nur rund oder oval. So stellen beispielsweise Trapezformen mit gerundeten Ecken, Pentagone, Hexagone oder Rhomben, deren Ecken mit festgelegten Radien gerundet sind, hohe Anforderungen an die maßgenaue Herstellung solcher Waschtischplattenbeckenausschnitte, zumal der Überstand der Ausschnitte minimal, absolut gleichmäßig, aber immer ausreichend und mit genau festgelegtem Gefälle an jedem Punkt des Ausschnitts sein muß. Hierbei werden zu große Überstände aus hygienischen Gründen abgelehnt.

Zur Herstellung solcher exakten, wasserfesten Beckenausschnitte für Unterbaubecken, wird ebenfalls eine vorgefertigte, negative Form verwandt. Hierbei sind sämtliche Rundungen einschließlich des festgelegten Gefälles von beispielsweise 15° und der vorgesehene Überstand durch diese Form exakt vorgegeben. Die vorgeschnittenen und vorpolierten Marmormodule werden in der beschriebenen Weise angelegt und fixiert. Wenn der Ring des Beckenausschnitts geschlossen ist, wird die Form mit Gießharz aufgefüllt. Hierdurch entsteht ein Ringmodul, dessen Innenkante z.B. aus Marmor besteht und durch den Gießharzaußenring zur weiteren Verarbeitung zusammengehalten wird. Diese Innenkante weist bereits die Radien, Gefälle und Maße auf, die für den Beckenausschnitt erforderlich sind. Dieser vorgefertigte Ring aus mineralischem Werkstoff und Gießharz wird dann in der Waschtischplattenhauptform millimetergenau und achsengetreu positioniert und in weiteren Gießverfahren in die Waschtischplatte eingegossen. Durch diese neuartige Technik wird es möglich, eine dreidimensionale absolute Maßgenauigkeit für Beckenausschnitte aus mineralischem Werkstoff an jedem festgelegten Punkt der Platte zu erzielen.

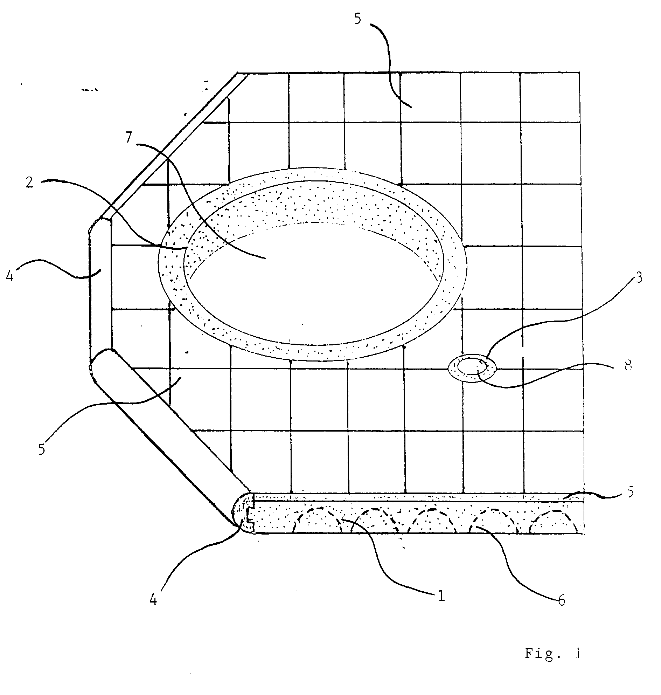

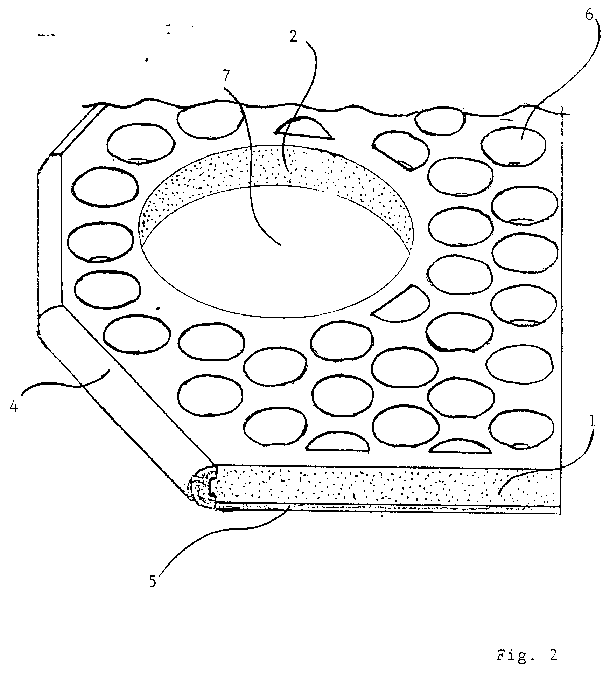

Ein Ausführungsbeispiel der Erfindung wird anhand der Figuren 1 und 2 erläutert.
Fig. 1 zeigt eine schräge Draufsicht auf die Oberseite einer Waschtischplatte und deren Schnitt.
Fig. 2 zeigt eine schräge Draufsicht auf die Unterseite der Waschtischplatte und deren Schnitt.
   Die erste Schicht (1) aus Harz, Calciumcarbonat und Glasfasern weist Ausnehmungen in Form von Waben (6) auf. Mit dieser Schicht (1) ist die zweite Schicht aus einer Vielzahl von einzelnen polierten quadratischen Plättchen (5) fest verbunden. An den Rändern ist die Schicht (1) mit dem außenpolierten Halbzylindermodul (4) mit innerer Nut fest verbunden. Die beispielhaft dargestellte Waschtischplatte weist eine Durchführung (7) für das Waschbecken und eine Durchführung (8) für eine Armatur auf. Die Durchführung (7) wird von dem formgerecht gegossenen, wasserfesten Einbaurand (2) begrenzt. Die Durchführung (8) wird durch eine kalibrierte, wasser- und bruchsichere Montagefläche (3) für eine Armatur begrenzt.

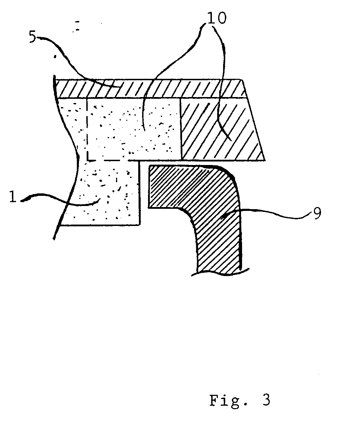

Fig. 3 zeigt einen Schnitt durch den Schichtkörper mit einem Unterbaubeckenrandmodul.

Hierbei liegt das vorgefertigte Modul aus den Steinsegmenten und dem Gießharzring (10) auf den Plättchen (5) auf. Die Fig. 3 zeigt ferner, wie der Beckenrand über das Unterbaubecken (9) geringfügig vorsteht und wie das Modul (10) mit der ersten Schicht (1) vergossen ist.

## Patentansprüche

1. Schichtkörper mit einer ersten Schicht (1) aus einem ein wasserfestes gehärtetes Gießharz enthaltenden Material und einer mit dieser Schicht fest verbundenen zweiten Schicht aus einer Vielzahl von einzelnen Plättchen (5) aus einem mineralischen Werkstoff, dadurch gekennzeichnet, daß die Plättchen (5) lückenlos aneinanderstoßen und daß zwischen den beiden Schichten Kein Kleber vorliegt.

2. Schichtkörper nach Anspruch 1, dadurch gekennzeichnet, daß das Gießharz ein Polyesterharz ist.

3. Schichtkörper nach Anspruch 1 oder 2, dadurch gekennzeichnet, daß die erste Schicht ferner Glasfasern und Calciumcarbonat aufweist.

4. Schichtkörper nach einem der Ansprüche 1 bis 3, dadurch gekennzeichnet, daß der Schichtkörper eine Waschtischplatte ist.

5. Schichtkörper nach einem der Ansprüche 1 bis 4, dadurch gekennzeichnet, daß die erste Schicht Ausnehmungen, vorzugsweise in Wabenform (6), aufweist.

6. Schichtkörper nach einem der Ansprüche 1 bis 5, dadurch gekennzeichnet, daß die Plättchen (5) in Form von Quadraten, Rechtecken, Trapezen oder Dreiecken ausgebildet sind.

7. Schichtkörper nach einem der Ansprüche 1 bis 6, dadurch gekennzeichnet, daß eine oder mehrere seitliche Begrenzungen des Schichtkörpers aus Halbzylindern (4) eines mineralischen Werkstoffs bestehen mit vorzugsweise einer zur Zylinderlänge parallel verlaufenden inneren Nut.

8. Verfahren zur Herstellung eines Schichtkörpers nach einem der Ansprüche 1 bis 7, dadurch gekennzeichnet, daß auf die Unterseite der zweiten Schicht ein wasserfestes Gießharz aufgebracht wird.

9. Verfahren nach Anspruch 8, dadurch gekennzeichnet, daß die die zweite Schicht bildenden Plättchen (5) mit ihren vorpolierten Oberseiten nach unten auf eine als Matrize dienende Form lückenlos gelegt werden, bevor das Gießharz aufgebracht wird.

10. Verfahren nach Anspruch 9, dadurch gekennzeichnet, daß die Plättchen (5), bevor sie in die Form gelegt werden, mit ihren vorpolierten Oberseiten nach oben auf einer gedruckten Schablone als Gesamtoberfläche zusammengestellt werden und diese durch ein Netzlaminat zusammengehalten wird.

11. Verfahren zur Herstellung eines Ausschnitts, insbesondere eines Beckenausschnitts für Unterbaubecken, für einen Schichtkörper nach einem der Ansprüche 1 bis 7, dadurch gekennzeichnet, daß die Plättchen (5) mit ihren Oberseiten als Segmente gegen die Innenkante einer negativen Ausschnittsform paßgenau angelegt werden, die Form mit Gießharz aufgefüllt und das entstandene Ausschnittsmodul in der Form des herzustellenden Schichtkörpers positioniert und durch weiteres Gießharz damit verbunden wird.

## Claims

1. Multilayered composite body having of a first layer (1) of a material containing a waterproof cured cast resin and a second layer rigidly fixed to said first layer and consisting of a plurality of single small plates (5) of mineral material, characterized in that
said small plates (5) abut against each other without gaps and no adhesive is present between said two layers.

2. Multilayered composite body according to claim 1, characterized in that said cast resin is polyester resin.

3. Multilayered composite body according to claim 1 or 2, characterized in that said first layer additionally comprises glass fibers and calcium carbonate.

4. Multilayered composite body according to one of the claims 1 to 3, characterized in that said multilayered composite body is the plate of a wash-stand.

5. Multilayered composite body according to one of the claims 1 to 4, characterized in that said first layer has recesses preferably in honeycomb shape (6).

6. Multilayered composite body according to one of the claims 1 to 5, characterized in that said small plates (5) are formed as squares, rectangles, trapeziums or triangles.

7. Multilayered composite body according to one of the claims 1 to 6, characterized in that one or more lateral limitation(s) of said multilayered composite body consist of half cylinders (4) of a mineral material with preferably one inner groove being parallel to the cylinder length.

8. Process for producing a composite body according to one of the claims 1 to 7, characterized in that the bottom side of said second layer is provided with a waterproof cast resin.

9. Process according to claim 8, characterized in that said small plates (5) forming said second layer are arranged without gaps on a form serving as matrix with their prepolished top surfaces turned to the bottom before the cast resin is applied.

10. Process according to claim 9, characterized in that said small plates (5) are arranged as a total surface on a printed pattern with their prepolished top surfaces upwards before being placed into the form and that said total surface is held together by a net laminate.

11. Process for producing a section, especially a basin section for a basin, which is situated below the plate of said wash-stand, for a multilayered composite body according to one of the claims 1 to 7 characterized in that said small plates (5) are accurately fitted with their top surfaces as sections against the inner edge of a negative section form, that the form is filled with cast resin, and that the obtained section module is positioned in the form of the multilayered composite body to be produced and that it is connected with it with additional cast resin.

## Revendications

1. Stratifié comprenant une première couche (1) d'un matériau contenant une résine moulée durcie résistante à l'eau et une deuxième couche fermement jointe avec cette couche formée d'une pluralité de plaquettes individuelles (5) en un matériau minéral, caractérisé en ce que les plaquettes (5) sont complètement en contact et en ce qu'il n'y a pas de colle entre les deux couches.

2. Stratifié après la revendication 1, caractérisé en ce que la résine moulée est une résine de polyester.

3. Stratifié après la revendication 1 ou 2, caractérisé en ce que la première couche présente de plus des fibres de verre et du carbonate de calcium.

4. Stratifié l'une quelconque des revendications 1 à 3, caractérisé en ce que le stratifié est une plaque de lavabo.

5. Stratifié selon l'une quelconque des revendications 1 à 4, caractérisé en ce que la première couche présente des évidements, de préférence sous forme d' alvéoles (6).

6. Stratifié selon l'une quelconque des revendications 1 à 5, caractérisé en ce que les plaquettes (5) sont formées en forme de carrés, de rectangles, de trapèzes ou de triangles.

7. Stratifié selon l'une quelconque des revendications 1 à 6, caractérisé en ce qu'une ou plusieurs frontières latérales du stratifié consistent en demi-cylindres (4) d'un matériau minéral avec de préférence une rainure intérieure s'étendant parallèlement à la longueur du cylindre.

8. Procédé pour la fabrication d'un stratifié selon l'une quelconque des revendications 1 à 7, caractérisé en ce qu'une résine moulée résistante à l'eau est appliquée sur la face inférieure de la deuxième couche.

9. Procédé selon la revendication 8, caractérisé en ce que les plaquettes (5) formant la deuxième couche sont posées complètement en contact avec leurs côtés supérieurs polis à l'avance tournés vers le bas sur une forme servant de matrice, avant que la résine moulée soit appliquée.

10. Procédé selon la revendication 9, caractérisé en ce que les plaquettes (5), avant qu'elles soient mises dans la forme, sont assemblées comme surface supérieure totale avec leurs côtés supérieurs polis à l'avance vers le haut sur un modèle imprimé et celui-ci est maintenu ensemble par un stratifié réticulé.

11. Procédé pour la fabrication d'un évidement, en particulier un évidement de bassin pour bassins inférieurs, pour un stratifié selon l'une quelconque des revendications 1 à 7, caractérisé en ce que les plaquettes (5) sont mises avec précision avec leurs cotés supérieurs comme segments contre le bord intérieur d'une forme d'évidement négative, la forme est remplie avec de la résine moulée et le module d'évidement créé est positionné dans la forme du stratifié à produire et y est relié par de la résine moulée supplémentaire.
